(19)

**Europäisches Patentamt**
**European Patent Office**
**Office européen des brevets**

(11) **EP 4 310 965 A1**

(12) **EUROPEAN PATENT APPLICATION**
published in accordance with Art. 153(4) EPC

(43) Date of publication:
**24.01.2024 Bulletin 2024/04**

(21) Application number: **22771402.9**

(22) Date of filing: **14.03.2022**

(51) International Patent Classification (IPC):
$H01M\ 8/04313^{(2016.01)}$ $\quad H01M\ 8/0444^{(2016.01)}$
$H01M\ 8/04746^{(2016.01)}$ $\quad H01M\ 8/10^{(2016.01)}$
$H01M\ 8/12^{(2016.01)}$

(52) Cooperative Patent Classification (CPC):
**H01M 8/04313; H01M 8/0444; H01M 8/04746;**
**H01M 8/10; H01M 8/12;** Y02E 60/50

(86) International application number:
**PCT/JP2022/011441**

(87) International publication number:
**WO 2022/196657 (22.09.2022 Gazette 2022/38)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **17.03.2021 JP 2021044058**

(71) Applicant: HORIBA, Ltd.
**Kyoto-shi, Kyoto 601-8510 (JP)**

(72) Inventors:
• **OKADA, Yoichi**
**Kyoto-shi, Kyoto 601-8510 (JP)**
• **TANAKA, Yoshinori**
**Kyoto-shi, Kyoto 601-8510 (JP)**
• **SASAI, Kohei**
**Kyoto-shi, Kyoto 601-8510 (JP)**
• **WATANABE, Shunta**
**Kyoto-shi, Kyoto 601-8510 (JP)**

(74) Representative: **Müller Hoffmann & Partner**
**Patentanwälte mbB**
**St.-Martin-Strasse 58**
**81541 München (DE)**

(54) **FUEL CELL EVALUATION SYSTEM AND FUEL CELL EVALUATION METHOD**

(57) The present invention is a fuel cell evaluation system (100) that obtains an actual gas consumption amount in a fuel cell in real time with accuracy and calculates a consumption amount of a fuel gas in the fuel cell (FV), the fuel cell evaluation system including: a fuel gas supply path (2) that supplies a fuel gas of a first flow rate to the fuel cell (FV); a fuel gas discharge path (4) that discharges the fuel gas from the fuel cell (FV); an inert gas introduction path (6, 8) that introduces an inert gas of a second flow rate into the fuel gas discharge path (4) or the fuel gas supply path (2); a first fuel gas concentration meter (7) that measures a fuel gas concentration in a mixed gas of the fuel gas and the inert gas flowing through the fuel gas discharge path (4); and a fuel gas consumption amount calculation unit (10) that calculates the consumption amount of the fuel gas in the fuel cell (FV) based on the first flow rate, the second flow rate, and the fuel gas concentration measured by the first fuel gas concentration meter (7).

Fig.1

EP 4 310 965 A1

**Description**

Technical Field

The present invention relates to a fuel cell evaluation system and a fuel cell evaluation method.

Background Art

Various fuel cell evaluation apparatuses have conventionally been considered to improve performance, reliability, or durability of fuel cells. For example, a fuel cell evaluation apparatus disclosed in Patent Literature 1 introduces at least one of a fuel gas and an oxidant gas into a fuel cell so that a power generation amount of the fuel cell changes, and measures a change in power generation amount of the fuel cell over time. The fuel cell evaluation apparatus can also measure a change in power generation amount of a fuel cell over time by introducing an inert gas into the fuel cell in a power generation state.

Citation List

Patent Literature

Patent Literature 1: JP 2005-135662 A

Summary of Invention

Technical Problem

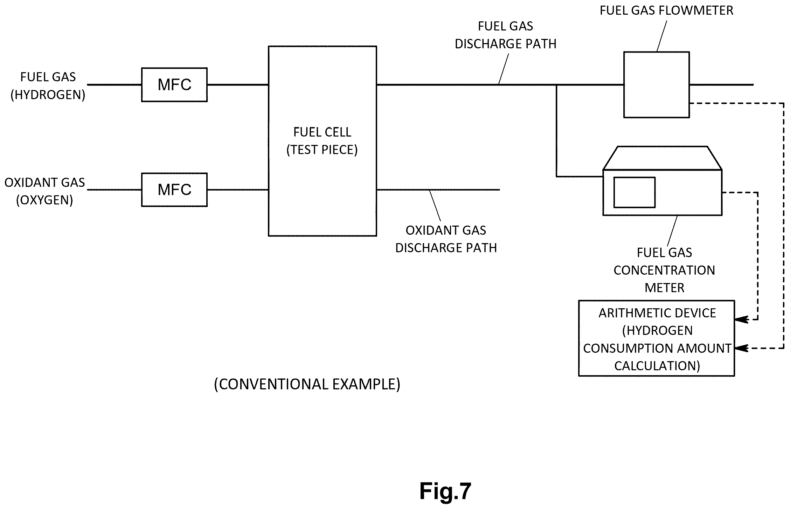

On the other hand, as one of methods for evaluating a fuel cell, there is a method for evaluating a fuel gas consumption amount in a fuel cell. As a conventional method for obtaining the fuel gas consumption amount, a method for analogizing a hydrogen consumption amount from the power generation amount of a fuel cell is known.
However, in the method for analogizing a hydrogen consumption amount from the power generation amount of a fuel cell, the actual hydrogen consumption amount cannot be obtained.
As a configuration for obtaining a fuel gas consumption amount, as shown in FIG. 7, it is considered that a flowmeter and a fuel gas concentration meter are provided in a fuel gas discharge path connected to a fuel cell, and a fuel cell consumption amount in the fuel cell is obtained from the amount of the fuel gas obtained by the flowmeter and the fuel gas concentration obtained by the fuel gas concentration meter.
However, separately providing a flowmeter costs money. Further, in a case where not only the flowmeter and the fuel gas concentration meter have different response speeds (response times), but also the fuel gas flow rate and the fuel gas concentration fluctuate in the fuel gas discharge path, it is difficult to measure the fuel gas flow rate and the fuel gas concentration of the fuel gas flowing through the fuel gas discharge path in synchronization. Thus, it is difficult to obtain the fuel gas consumption amount in the fuel cell with accuracy. In addition, since reaction water and dew condensation water are generated in the fuel gas discharge path, it is difficult to accurately measure the flow rate of the fuel gas. The problem in the fuel gas consumption amount has been described above, but oxidant gases have the same problem.
The present invention has been made in view of the above-described problems, and a main object of the present invention is to obtain an actual gas consumption amount in a fuel cell with accuracy.

Solution to Problem

That is, a fuel cell evaluation system according to the present invention is a fuel cell evaluation system that calculates a consumption amount of a fuel gas in a fuel cell, the fuel cell evaluation system including a fuel gas supply path that supplies the fuel gas of a first flow rate to the fuel cell, a fuel gas discharge path that discharges the fuel gas from the fuel cell, an inert gas introduction path that introduces an inert gas of a second flow rate into the fuel gas discharge path or the fuel gas supply path, a first fuel gas concentration meter that measures a fuel gas concentration in a mixed gas of the fuel gas and the inert gas flowing through the fuel gas discharge path, and a fuel gas consumption amount calculation unit that calculates a consumption amount of the fuel gas in the fuel cell based on the first flow rate, the second flow rate, and the fuel gas concentration measured by the first fuel gas concentration meter.
In such a fuel cell evaluation system, the fuel gas of the first flow rate is supplied to the fuel cell through the fuel gas supply path, the inert gas of the second flow rate is introduced into the fuel gas discharge path or the fuel gas supply path, the fuel gas concentration in the mixed gas flowing through the fuel gas discharge path is measured, and the consumption amount of the fuel gas in the fuel cell is calculated based on the first flow rate, the second flow rate, and the fuel gas concentration measured by the first fuel gas concentration meter. Thus, the consumption amount of the fuel gas in the fuel cell can be obtained without providing a fuel gas flowmeter for measuring the flow rate of the fuel gas in the fuel gas discharge path. As a result, it is not necessary to consider a difference in response speed (response time) between the fuel gas flowmeter and the fuel gas concentration meter as in the conventional case, and it is not necessary to consider an error in the flowmeter due to reaction water or dew condensation water, and it is possible to obtain the actual consumption amount of fuel gas in a fuel cell in real time with accuracy.

As a specific embodiment for obtaining the consumption amount of the fuel gas, it is desirable that the fuel gas consumption amount calculation unit calculates the consumption amount of the fuel gas by using a relationship between a total discharge flow rate and a discharge flow rate of the fuel gas, the total discharge flow rate being a total of the discharge flow rate of the fuel gas discharged from the fuel cell and the second flow rate, and the fuel gas concentration measured by the first fuel gas concentration meter.

As a specific embodiment for obtaining the consumption amount of the fuel gas, it is conceivable that the fuel gas consumption amount calculation unit calculates the consumption amount of the fuel gas by using a relational equation of $Qh2 = Qh1 - (Ch1 \cdot Qn)/(1 - Ch1)$, where $Qh2$ is the consumption amount of the fuel gas, $Qh1$ the first flow rate, $Qn$ is the second flow rate, and $Ch1$ is the fuel gas concentration measured by the first fuel gas concentration meter.

In order to change the concentration of the fuel gas supplied to the fuel cell to obtain the actual consumption amount of the fuel gas in the fuel cell, it is desirable that the inert gas introduction path introduces an inert gas of a predetermined rate into the fuel gas supply path, and a fuel gas concentration to be supplied to the fuel cell is changed by adjusting a flow rate of the inert gas to be supplied to the fuel gas supply path.

When an electrolyte membrane of the fuel cell is damaged and pinholes and the like are generated, the oxidant gas on the cathode side permeates to the anode side through the damaged portion of the electrolyte membrane (cross leakage of oxidant gas). In order to set the amount of cross leakage of the oxidant gas as an evaluation item of the fuel cell, it is desirable to further include a first oxidant gas concentration meter that measures an oxidant gas concentration in the mixed gas in the fuel gas discharge path, and an oxidant gas cross leakage amount calculation unit that calculates a cross leakage amount of an oxidant gas based on the oxidant gas concentration measured by the first oxidant gas concentration meter.

In order to evaluate a fuel cell by obtaining not only a consumption amount of a fuel gas but also a consumption amount of an oxidant gas, it is desirable that the fuel cell evaluation system according to the present invention further includes an oxidant gas supply path that supplies an oxidant gas of a third flow rate to the fuel cell, an oxidant gas discharge path through that discharges the oxidant gas from the fuel cell, an inert gas introduction path that introduces an inert gas of a fourth flow rate into the oxidant gas discharge path or the oxidant gas supply path, a second oxidant gas concentration meter that measures an oxidant gas concentration in a mixed gas of the oxidant gas and the inert gas flowing through the oxidant gas discharge path, and an oxidant gas consumption amount calculation unit that calculates a consumption amount of the oxidant gas in the fuel cell based on the third flow rate, the fourth flow rate, and the oxidant gas concentration measured by the second oxidant gas concentration meter.

When an electrolyte membrane of the fuel cell is damaged and pinholes and the like are generated, the fuel gas on the anode side permeates to the cathode side through the damaged portion of the electrolyte membrane (cross leakage of fuel gas). In order to set the amount of cross leakage of the fuel gas as an evaluation item of the fuel cell, it is desirable to further include a second fuel gas concentration meter that measures a fuel gas concentration in the mixed gas flowing through the oxidant gas discharge path, and a fuel gas cross leakage amount calculation unit that calculates a cross leakage amount of the fuel gas based on the fuel gas concentration measured by the second fuel gas concentration meter.

Further, in order to evaluate a fuel cell specifically for the amount of fuel gas cross leakage in the fuel cell, the present invention is a fuel cell evaluation system that calculates the amount of fuel gas cross leakage in the fuel cell, the fuel cell evaluation system including a fuel gas supply path that supplies the fuel gas to the fuel cell, a fuel gas discharge path that discharges the fuel gas from the fuel cell, an oxidant gas supply path that supplies an oxidant gas to the fuel cell, an oxidant gas discharge path that discharges the oxidant gas from the fuel cell, an inert gas introduction path that introduces an inert gas of a predetermined flow rate into the oxidant gas discharge path or the oxidant gas supply path, an oxidant gas concentration meter that measures an oxidant gas concentration in gas flowing through the oxidant gas discharge path, and a fuel gas cross leakage calculation unit that calculates a cross leak amount of the fuel gas based on the oxidant gas concentration measured by the fuel gas concentration meter, the fuel gas concentration measured by the fuel gas concentration meter, and the predetermined amount of the inert gas.

In a fuel cell, the consumption amount of oxidant gas such as oxygen can be evaluated as well as the consumption amount of fuel gas. Thus, a fuel cell evaluation system according to the present invention is a fuel cell evaluation system that calculates a consumption amount of an oxidant gas in a fuel cell, the fuel cell evaluation system including an oxidant gas supply path that supplies an oxidant gas of a first flow rate to the fuel cell, an oxidant gas discharge path that discharges the oxidant gas from the fuel cell, an inert gas introduction path that introduces an inert gas of a second flow rate into the oxidant gas discharge path or the oxidant gas supply path, an oxidant gas concentration meter that measures an oxidant gas concentration in a mixed gas of the oxidant gas and the inert gas flowing through the oxidant gas discharge path, and an oxidant gas consumption amount calculation unit that calculates the consumption amount of the oxidant gas in the fuel cell based on the first flow rate, the second flow rate, and the oxidant gas concentration measured by the oxidant gas concentration meter.

Further, a fuel cell evaluation system according to the present invention is a fuel cell evaluation system that calculates a consumption amount of a fuel gas in a fuel cell, the fuel cell evaluation system including a fuel gas supply path that supplies the fuel gas of a first flow rate to the fuel cell, a fuel gas discharge path that discharges the fuel gas from the fuel cell, an inert gas introduction path that introduces an inert gas of a second flow rate into the fuel gas discharge path or the fuel gas supply path, a first fuel gas concentration meter that measures a fuel gas concentration in a mixed gas of the fuel gas and the inert gas flowing through the fuel gas discharge path, and a total consumption amount calculation unit that calculates a fuel gas consumption amount that is a consumption amount of the fuel gas consumed through a reaction in the fuel cell based on electric power generated in the fuel cell, calculates a fuel gas discharge amount that is a discharge amount of the fuel gas discharged without being consumed in the fuel cell, and calculates a total consumption amount of the fuel gas from the fuel gas consumption amount and the fuel gas discharge amount.

With this configuration, the fuel cell can be evaluated using a total consumption amount of fuel gas which is a total of a fuel gas consumption amount being a consumption amount of the fuel gas consumed through the reaction in the fuel cell based on the electric power generated in the fuel cell, and a fuel gas discharge amount being a discharge amount of the fuel gas discharged without being consumed in the fuel cell.

In such a fuel cell evaluation system, the oxidant gas of the first flow rate is supplied to the fuel cell through the oxidant gas supply path, the inert gas of the second flow rate is introduced into the oxidant gas discharge path or the oxidant gas supply path, the oxidant gas concentration in the mixed gas flowing through the oxidant gas discharge path is measured, and the consumption amount of the oxidant gas in the fuel cell is calculated based on the first flow rate, the second flow rate, and the oxidant gas concentration measured by the first oxidant gas concentration meter. Thus, the consumption amount of the oxidant gas in the fuel cell can be obtained without providing an oxidant gas flowmeter for measuring the flow rate of the oxidant gas in the oxidant gas discharge path. As a result, it is not necessary to consider a difference in response speed (response time) between the oxidant gas flowmeter and the oxidant gas concentration meter as in the conventional case, and it is possible to obtain the actual consumption amount of oxidant gas in a fuel cell in real time with accuracy.

Further, a fuel cell evaluation method according to the present invention is a fuel cell evaluation method for calculating a consumption amount of a fuel gas in a fuel cell using the above-described fuel cell evaluation system, the fuel cell evaluation method including measuring a fuel gas concentration in a mixed gas of the fuel gas and the inert gas flowing through the fuel gas discharge path, and calculating the consumption amount of the fuel gas in the fuel cell based on the first flow rate, the second flow rate, and the fuel gas concentration. Advantageous Effects of Invention

According to the present invention described above, the actual gas consumption amount in a fuel cell can be obtained in real time with accuracy.

Brief Description of Drawings

FIG. 1 is an overall schematic diagram of a fuel cell evaluation system according to a first embodiment of the present invention.

FIG. 2 is an overall schematic diagram of a fuel cell evaluation system according to a second embodiment of the present invention.

FIG. 3 is an overall schematic diagram of a fuel cell evaluation system according to a third embodiment of the present invention.

FIG. 4 is an overall schematic diagram of a fuel cell evaluation system according to a fourth embodiment of the present invention.

FIG. 5 is an overall schematic diagram of a fuel cell evaluation system according to a modification.

FIG. 6 is an overall schematic diagram of a fuel cell evaluation system according to a modification.

FIG. 7 is an overall schematic diagram of a conventional fuel cell evaluation system.

Description of Embodiments

<First embodiment>

Hereinafter, a fuel cell evaluation system according to a first embodiment of the present invention will be described with reference to the drawings.

A fuel cell evaluation system 100 of the present embodiment obtains a hydrogen consumption amount of a fuel cell FV that generates power through an electrochemical reaction of hydrogen as a fuel gas supplied to an anode side and oxygen as an oxidant gas supplied to a cathode side. Examples of the fuel cell FV as a test piece include a polymer electrolyte fuel cell, a solid oxide fuel cell, and a phosphoric acid fuel cell.

<Device configuration>

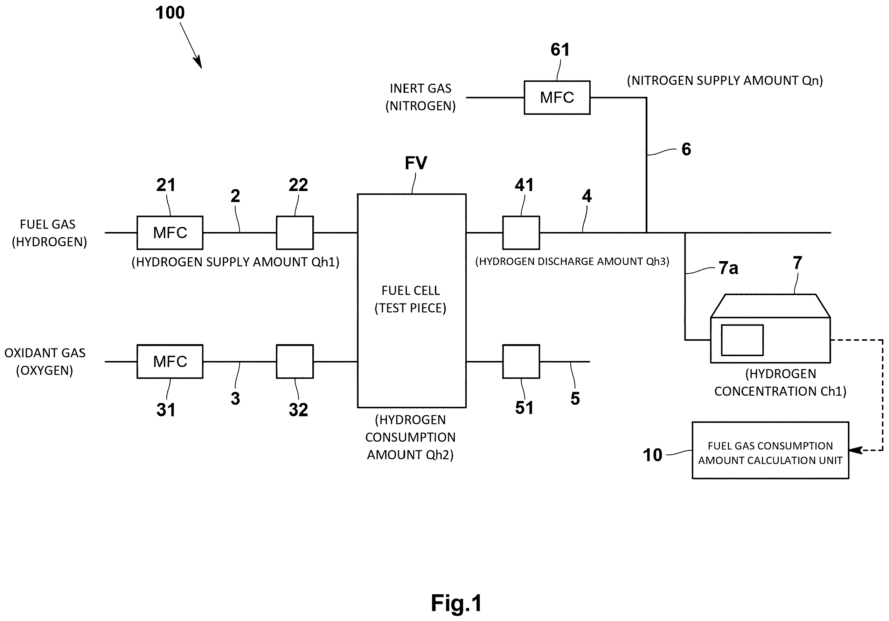

Specifically, the fuel cell evaluation system 100 calculates a hydrogen consumption amount in the fuel cell FV as a test piece in real time to evaluate the fuel cell FV, and as shown in FIG. 1, the fuel cell evaluation system includes a fuel gas supply path 2 that supplies hydrogen of a first flow rate $Qh1$ to the fuel cell FV, an oxidant gas supply path 3 that supplies oxygen to the fuel cell FV, a fuel gas discharge path 4 that discharges hydrogen from the fuel cell FV, an oxidant gas discharge path 5 that discharges oxygen from the fuel cell FV, an inert gas introduction path 6 that introduces nitrogen, which is an inert gas, of a second flow rate $Qn$, into the fuel gas discharge path 4, and a first fuel gas concentration meter 7 that measures a hydrogen concentration in a mixed gas of hydrogen and nitrogen flowing through the fuel gas discharge path 4, and a fuel gas consumption amount calculation unit 10 that calculates a hydrogen consumption amount in the fuel cell.

Here, the fuel gas supply path 2 is connected to a hydrogen source (not illustrated) to supply hydrogen having a concentration of 100% to the fuel cell FV The fuel gas supply path 2 is provided with a flow rate adjusting device 21 such as a mass flow controller that adjusts hydrogen to be supplied to the fuel cell to a first flow rate $Qh1$. In the present embodiment, the fuel gas supply path 2 is provided with a humidifier 22 for humidifying hydrogen to be supplied to the fuel cell on the downstream side of the flow rate adjusting device 21, but the humidifier 22 does not have to be provided.

Here, the oxidant gas supply path 3 supplies air containing oxygen to the fuel cell FV The oxidant gas supply path 3 is provided with a flow rate adjusting device 31 such as a mass flow controller that adjusts a supply amount of air containing oxygen to be supplied to the fuel cell FV In the present embodiment, the oxidant gas supply path 3 is provided with a humidifier 32 for humidifying air containing oxygen to be supplied to the fuel cell on the downstream side of the flow rate adjusting device 31, but the humidifier 32 does not have to be provided.

The fuel gas discharge path 4 discharges hydrogen that has passed through the fuel cell FV to the outside. Here, the fuel gas discharge path 4 is provided with a dehumidifier 41, but the dehumidifier 41 does not have to be provided.

The oxidant gas discharge path 5 discharges air containing oxygen that has passed through the fuel cell FV to the outside. Here, the oxidant gas discharge path 5 is provided with a dehumidifier 51, but the dehumidifier 51 does not have to be provided.

The inert gas introduction path 6 is connected to the fuel gas discharge path 4 to introduce nitrogen having a concentration of 100% into the fuel gas discharge path 4. The inert gas introduction path 6 is provided with a flow rate adjusting device 61 such as a mass flow controller that adjusts nitrogen introduced into the fuel gas discharge path 4 to a second flow rate $Qn$. In the present embodiment, since the dehumidifier 41 is provided in the fuel gas discharge path 4, the inert gas introduction path 6 is connected to the downstream side of the dehumidifier 41 in the fuel gas discharge path 4. As the inert gas, helium, argon, or the like may be used in addition to nitrogen.

The first fuel gas concentration meter 7 is a hydrogen concentration meter that measures a hydrogen concentration in a mixed gas of hydrogen and nitrogen flowing through the fuel gas discharge path 4. The first fuel gas concentration meter 7 is provided on the downstream side from a connection point of the inert gas introduction path 6 in the fuel gas discharge path 4. The first fuel gas concentration meter 7 of the present embodiment is connected to the fuel gas discharge path 4 via a connection path 7a.

The function of the fuel gas consumption amount calculation unit 10 is exerted by a computer including a CPU, a memory, an input/output interface, an AD converter, and the like.

The fuel gas consumption amount calculation unit 10 calculates a hydrogen consumption amount $Qh2$ using a relational equation of $Qh2 = Qh1 - (Ch1 \cdot Qn)/(1 - Ch1)$, where $Qh2$ is the hydrogen consumption amount, $Qh1$ is the first flow rate of hydrogen supplied to the fuel cell FV, $Qn$ is the second flow rate of nitrogen introduced into the fuel gas discharge path 4, and $Ch1$ is the hydrogen concentration measured by the first fuel gas concentration meter 7. The fuel gas consumption amount calculation unit 10 may acquire the first flow rate $Qh1$ and the second flow rate $Qn$ from control units of the flow rate adjusting devices 21 and 61 provided in the respective flow paths.

Hereinafter, a derivation process of this equation will be described.

- Amount of hydrogen supplied to fuel cell FV: Qh1 (known, adjustable with flow rate adjusting device 21)
- Hydrogen consumption amount in fuel cell FV: Qh2 (unknown)
- Amount of hydrogen discharged from fuel cell FV: Qh3 (unknown)
- Nitrogen supply amount of inert gas introduction path 6: Qn (known, adjustable with flow rate adjusting device 61)
- Hydrogen concentration in fuel gas discharge path 4: Ch1 (measured value, measured by first fuel gas concentration meter 7)

The following relationship is established from the above five values. The second equation below is an equation indicating the relationship (specifically, the ratio) between a total discharge flow rate (Qn + Qh3), which is the total of the discharge flow rate Qh3 of the fuel gas discharged from the fuel cell and the second flow rate Qn, and the discharge flow rate Qh3 of the fuel gas, and the relationship with the fuel gas concentration Ch1 measured by the first fuel gas concentration meter 7.

$$Qh2 = Qh1 - Qh3$$

$$Ch1 = Qh3/(Qn + Qh3)$$

When Qh3 is deleted from these two equations, the following equation is obtained, and the hydrogen consumption amount Qh2 can be calculated from the relationship between the hydrogen supply amount Qh1, the nitrogen supply amount Qn, and the hydrogen concentration Ch1.

$$Qh2 = Qh1 - (Ch1 \cdot Qn)/(1 - Ch1)$$

<Effects of first embodiment>

According to the fuel cell evaluation system 100 of the present embodiment configured as described above, hydrogen of the first flow rate Qh1 is supplied to the fuel cell FV by the fuel gas supply path 2, nitrogen of the second flow rate Qn is introduced into the fuel gas discharge path 4, the hydrogen concentration Ch1 in the mixed gas flowing through the fuel gas discharge path 4 is measured, and the hydrogen consumption amount Qh2 in the fuel cell FV is calculated based on the first flow rate Qh1, the second flow rate Qn, and the hydrogen concentration Ch1 measured by the first fuel gas concentration meter 7. Thus, the hydrogen consumption amount Qh2 in the fuel cell FV can be obtained without providing a fuel gas flowmeter for measuring the flow rate of the fuel gas in the fuel gas discharge path 4. As a result, it is not necessary to consider a difference in response speed (response time) between the fuel gas flowmeter and the fuel gas concentration meter as in the conventional case, and it is not necessary to consider an error in the flowmeter due to reaction water or dew condensation water, and it is possible to obtain the actual hydrogen consumption amount Qh2 in the fuel cell FV in real time with accuracy.

<Second embodiment>

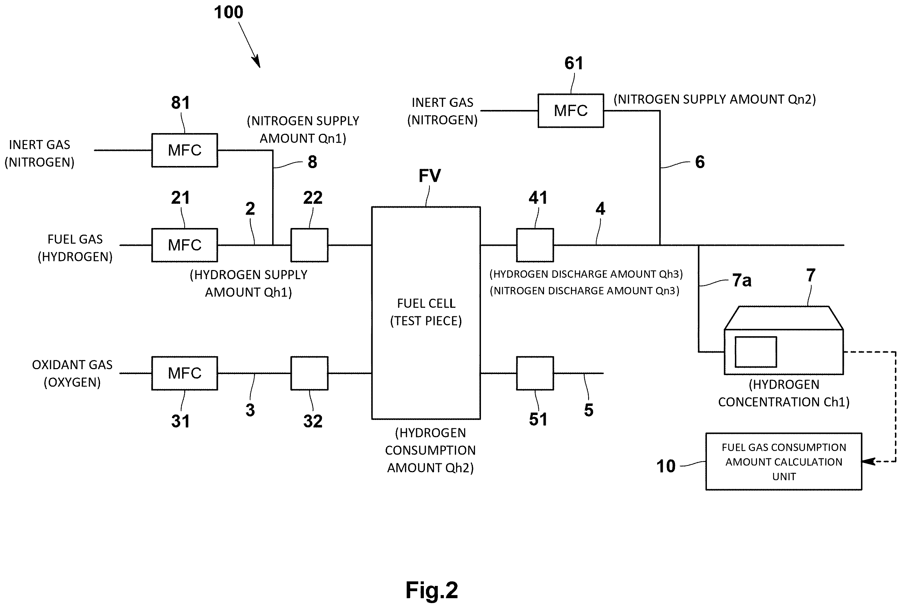

Next, a fuel cell evaluation system according to a second embodiment will be described.
Unlike the first embodiment, the fuel cell evaluation system 100 of the second embodiment can change the hydrogen concentration to be supplied to the fuel cell FV to evaluate the fuel cell when hydrogen of various concentrations is supplied.
Specifically, as shown in FIG. 2, the fuel cell evaluation system 100 further includes an inert gas introduction path 8 that introduces an inert gas such as nitrogen of a predetermined flow rate into the fuel gas supply path, in addition to the configuration of the above embodiment.
The inert gas introduction path 8 is connected to the fuel gas supply path 2 to introduce, for example, nitrogen having a concentration of 100% into the fuel gas supply path 2. The inert gas introduction path 8 is provided with a flow rate adjusting device 81 such as a mass flow controller that adjusts nitrogen to be introduced into the fuel gas supply path 2 to a predetermined flow rate Qn1. Then, the flow rate adjusting device 81 adjusting the flow rate of nitrogen to be supplied to the fuel gas supply path 2 changes the hydrogen concentration to be supplied to the fuel cell FV together with the flow rate adjusting device 21 provided in the fuel gas supply path 2.
In this configuration, the fuel gas consumption amount calculation unit 10 calculates the hydrogen consumption amount Qh2 using a relational equation of $Qh2 = Qh1 - Ch1 \cdot (Qn1 + Qn2)/(1 - Ch1)$, where Qh2 is the hydrogen consumption amount, Qh1 is the first flow rate of hydrogen supplied to the fuel cell FV, Qn1 is a predetermined flow rate of nitrogen to be supplied to the fuel cell FV, Qn2 is the second flow rate of nitrogen to be introduced into the fuel gas discharge path 4, and Ch1 the hydrogen concentration measured by the first fuel gas concentration meter 7. The fuel gas consumption amount calculation unit 10 may acquire the first flow rate Qh1 and the nitrogen supply amounts Qn1 and Qn2 from control units of the flow rate adjusting devices 21, 61, and 81 provided in the respective flow paths.

Hereinafter, a derivation process of this equation will be described.

- Amount of hydrogen supplied to fuel cell FV: Qh1 (known, adjustable with flow rate adjusting device 21)
- Hydrogen consumption amount in fuel cell FV: Qh2 (unknown)
- Amount of hydrogen discharged from fuel cell FV: Qh3 (unknown)
- Amount of nitrogen supplied to fuel cell FV: Qn1 (known, adjustable with flow rate adjusting device 81)
- Nitrogen supply amount of inert gas introduction path 6: Qn2 (known, adjustable with flow rate adjusting device 61)
- Amount of nitrogen discharged from fuel cell FV: Qn3 (same value as Qn1)
- Hydrogen concentration in fuel gas discharge path 4: Ch1 (measured value, measured by first fuel gas concentration meter 7)

The following relationship is established from the above seven values.

$$Qh2 = Qh1 - Qh3$$

$$Ch1 = Qh3/(Qn3 + Qn2 + Qh3)$$

$$Qn1 = Qn3$$

When Qn3 and Qh3 are deleted from these three equations, the following equation is obtained, and the hydrogen consumption amount Qh2 can be calculated from the relationship between the hydrogen supply amount Qh1, the nitrogen supply amount Qn1, the nitrogen supply amount Qn2, and the hydrogen concentration Ch1.

$$Qh2 = Qh1 - Ch1 \cdot (Qn1 + Qn2)/(1 - Ch1)$$

<Effects of second embodiment>

According to the fuel cell evaluation system 100 of the present embodiment configured as described above, in addition to the effects of the first embodiment, the fuel cell FV can be evaluated when hydrogen having various concentrations is supplied. In the second embodiment, the hydrogen consumption amount Qh2 can be calculated even when nitrogen is not introduced into the fuel gas discharge path 4 (that is, a configuration in which the inert gas introduction path 6 is not provided).

<Third embodiment>

Next, a fuel cell evaluation system according to a third embodiment will be described.

The fuel cell evaluation system 100 of the third embodiment calculates a cross leakage amount of oxygen, which is an oxidant gas, in addition to the first and second embodiments.

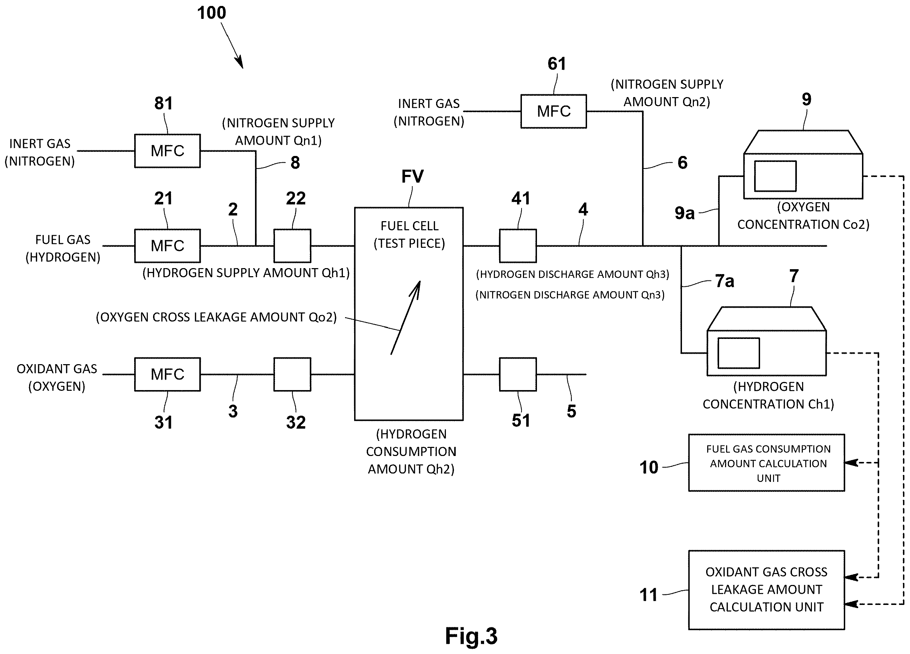

Specifically, as shown in FIG. 3, the fuel cell evaluation system 100 further includes, in addition to the configuration of the above embodiments, a first oxidant gas concentration meter 9 that measures an oxygen concentration Co2 in the mixed gas in the fuel gas discharge path 4, and an oxidant gas cross leakage amount calculation unit 11 that calculates a cross leakage amount Qo2 of oxygen based on the oxygen concentration Co2 measured by the first oxidant gas concentration meter 9.

The first oxidant gas concentration meter 9 is an oxygen concentration meter that measures the oxygen concentration in the mixed gas flowing through the fuel gas discharge path 4. The first oxidant gas concentration meter 9 is provided on the downstream side from the connection point of the inert gas introduction path 6 in the fuel gas discharge path 4. The first oxidant gas concentration meter 9 of the present embodiment is connected to the fuel gas discharge path 4 via a connection path 9a.

The function of the oxidant gas cross leakage amount calculation unit 11 is exerted by a computer including a CPU, a memory, an input/output interface, an AD converter, and the like.

The oxidant gas cross leakage amount calculation unit 11 calculates the oxidant gas cross leakage amount $Qo2$ using a relational equation of $Qo2 = Co2 \cdot (Qh3 + Qn3 + Qn2)$, where $Qo2$ is the oxidant gas cross leakage amount, $Qh3$ is a hydrogen discharge amount discharged from the fuel cell FV, $Qn3$ is a nitrogen discharge amount discharged from the fuel cell FV, $Qn2$ is the second flow rate of nitrogen introduced into the fuel gas discharge path 4, and $Co2$ is the oxygen concentration measured by the first oxidant gas concentration meter 9.

$Qh3$ is obtained by subtracting the hydrogen consumption amount $Qh2$ from the hydrogen supply amount $Qh1$ ($Qh3 = Qh1 - Qh2$). $Qn3$ is the same value as the nitrogen supply amount $Qn1$ ($Qn3 = Qn1$).

<Effects of third embodiment>

According to the fuel cell evaluation system 100 of the present embodiment configured as described above, in addition to the effects of the first and second embodiments, the amount of cross leakage amount $Qo2$ of the oxidant gas to the anode side can be obtained. In the third embodiment, the cross leakage amount $Qo2$ of the oxidant gas can be calculated even when nitrogen is not introduced into the fuel gas discharge path 4 (that is, a configuration in which the inert gas introduction path 6 is not provided) or when nitrogen is not introduced into the fuel gas supply path (that is, a configuration in which the inert gas introduction path 8 is not provided).

<Fourth embodiment>

Next, a fuel cell evaluation system according to a fourth embodiment will be described.

The fuel cell evaluation system 100 of the fourth embodiment obtains the oxygen consumption amount of the fuel cell FV and the hydrogen cross leakage amount to the cathode side in addition to the above embodiments.

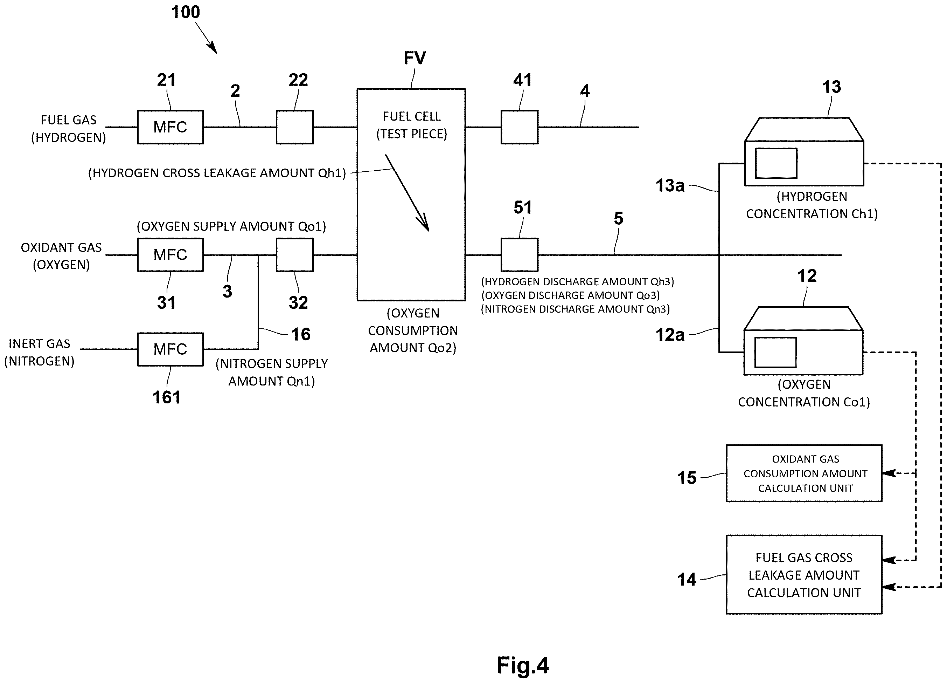

Specifically, as shown in FIG. 4, the fuel cell evaluation system 100 includes a second oxidant gas concentration meter (oxygen concentration meter) 12 that measures the oxygen concentration in the mixed gas flowing through the oxidant gas discharge path 5, and a second fuel gas concentration meter (hydrogen concentration meter) 13 that measures the hydrogen concentration in the mixed gas flowing through the oxidant gas discharge path 5. The second oxidant gas concentration meter 12 is connected to the oxidant gas discharge path 5 via the connection path 12a, and the second fuel gas concentration meter 13 is connected to the oxidant gas discharge path 5 via the connection path 13a. The fuel cell evaluation system 100 further includes an inert gas introduction path 16 that introduces nitrogen of a predetermined flow rate into the oxidant gas supply path 3. The inert gas introduction path 16 is connected to the fuel gas supply path 2 to introduce nitrogen having a concentration of 100% into the fuel gas supply path 2. The inert gas introduction path 16 is provided with a flow rate adjusting device 161 such as a mass flow controller that adjusts nitrogen to be introduced into the fuel gas supply path 2 to a predetermined flow rate $Qn1$.

The fuel cell evaluation system 100 further includes a fuel gas cross leakage amount calculation unit 14 that calculates a cross leakage amount $Qh1$ of hydrogen based on the oxygen concentration $Co1$ measured by the second oxidant gas concentration meter 12 and the hydrogen concentration $Ch1$ measured by the second fuel gas concentration meter 13, and an oxidant gas consumption amount calculation unit 15 that calculates an oxygen consumption amount $Qo2$ in the fuel cell FV based on the oxygen concentration $Co1$ measured by the second oxidant gas concentration meter 12 and the hydrogen concentration $Ch1$ measured by the second fuel gas concentration meter 13.

The functions of the fuel gas cross leakage amount calculation unit 14 and the oxidant gas consumption amount calculation unit 15 are exerted by a computer including a CPU, a memory, an input/output interface, an AD converter, and the like.

Specifically, the fuel gas cross leakage amount calculation unit 14 and the oxidant gas consumption amount calculation unit 15 calculate the hydrogen cross leakage amount $Qh1$ and the oxygen consumption amount $Qo2$ based on the equation derived as follows. The fuel gas cross leakage amount calculation unit 14 and the oxidant gas consumption amount calculation unit 15 may acquire the oxygen supply amount $Qo1$ and the nitrogen supply amount $Qn1$ from control units of the flow rate adjusting devices 21 and 121 provided in the respective flow paths.

Hereinafter, a derivation process of the equation for calculating the hydrogen cross leakage amount $Qh1$ and the oxygen consumption amount $Qo2$ will be described.

- Amount of oxygen supplied to fuel cell FV: $Qo1$ (known, adjustable with cylinder concentration and flow rate adjusting device 31)
- Oxygen consumption amount in fuel cell FV: $Qo2$ (unknown)
- Amount of oxygen discharged from fuel cell FV: $Qo3$ (unknown)
- Amount of nitrogen supplied to fuel cell FV: $Qn1$ (known, adjustable with cylinder concentration and flow rate adjusting device 121)
- Amount of nitrogen discharged from fuel cell FV: $Qn3$ (same value as $Qn1$)
- Amount of hydrogen discharged from fuel cell FV: $Qh3$ (unknown, same as cross leakage amount $Qh1$)

- Oxygen concentration in oxidant gas discharge path 5: Co1 (measured value, measured by second oxidant gas concentration meter 12)
- Hydrogen concentration in oxidant gas discharge path 5: Ch1 (measured value, measured by second fuel gas concentration meter 13)

The following relationship is established from the above eight values.

$$Qh1 = Qh3$$

$$Qo1 = Qo2 + Qo3$$

$$Co1 = Qo3/(Qn3 + Qh3 + Qo3)$$

$$Ch1 = Qh3/(Qn3 + Qh3 + Qo3)$$

When the cross leakage amount Qh1 is obtained from these four equations, the following equation is obtained, and the cross leakage amount Qh1 can be calculated from the relationship between the nitrogen supply amount Qn1, the hydrogen concentration Ch1, and the oxygen concentration Co1.

$$Qh1 = Qn1/(1/Ch1 - 1 - Co1/Ch1)$$

From the above four equations and the calculated cross leakage amount Qh1, the oxygen consumption amount Qo2 can be calculated from the relationship between the oxygen supply amount Qo1, the nitrogen supply amount Qn1, the hydrogen cross leakage amount Qh1, the hydrogen concentration Ch1, and the oxygen concentration Co1 by the following equation.

$$Qo2 = (Qo1 - Co1 \cdot Qo1 - Co1 \cdot Qh1 - Co1 \cdot Qn1)/(1 - Co1)$$

<Effects of fourth embodiment>

According to fuel cell evaluation system 100 of the present embodiment configured as described above, in addition to the effects of the above-described embodiments, the hydrogen cross leakage amount Qh1 to the cathode side can be obtained. In this embodiment, the configuration of the first to third embodiments may be omitted (that is, a configuration in which the first fuel gas concentration meter 7, the first oxidant gas concentration meter 9, the fuel gas consumption amount calculation unit 10, the oxidant gas cross leakage amount calculation unit 11, and the like are not provided). In the fourth embodiment, a system specialized for obtaining the hydrogen cross leakage amount Qh1 may be used without having the oxidant gas consumption amount calculation unit 15.

<Other embodiments>

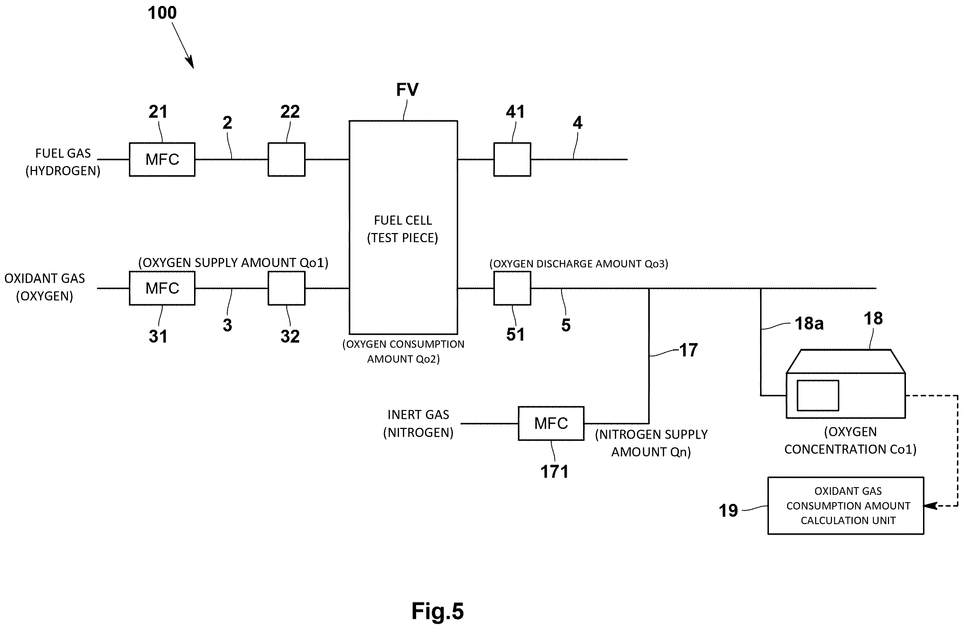

For example, in the first embodiment, the hydrogen consumption amount of the fuel cell FV is calculated, but as shown in FIG. 5, the consumption amount of the oxidant gas (oxygen) of the fuel cell FV may be calculated. In this case, the fuel cell evaluation system 100 includes the fuel gas supply path 2 that supplies hydrogen to the fuel cell FV, the oxidant gas supply path 3 that supplies oxygen of a first flow rate Qo1 to the fuel cell FV, the fuel gas discharge path 4 that discharges hydrogen from the fuel cell FV, the oxidant gas discharge path 5 that discharges oxygen from the fuel cell FV, an inert gas introduction path 17 that introduces nitrogen as an inert gas of a second flow rate Qn into the oxidant gas discharge path 5, an oxidant gas concentration meter 18 that measures the oxygen concentration Co1 in a mixed gas of oxygen and nitrogen flowing through the oxidant gas discharge path 5, and an oxidant gas consumption amount calculation unit 19 that calculates the oxygen consumption amount Qo2 in the fuel cell FV Here, the oxidant gas consumption amount calculation unit 19 calculates the oxygen consumption amount Qo2 using a relational equation of Qo2 = Qo1 - (Co1·Qn)/(1 - Co1) according to the same idea as in the first embodiment, where Qo2 is the oxygen consumption amount, Qo1 is the first flow rate of oxygen supplied to the fuel cell FV, Qn is the second flow rate of nitrogen introduced into the oxidant gas discharge path 5, and Co1 is the oxygen concentration measured by the oxidant gas consumption amount calculation unit 19.

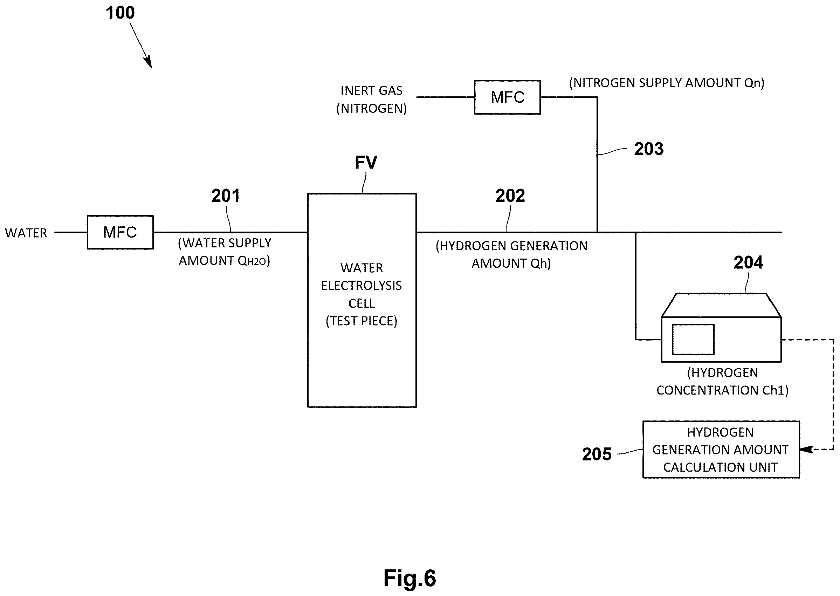

In addition to the above-described embodiments, as shown in FIG. 6, the present invention can also be applied to those for obtaining the amount of hydrogen generated from a water electrolysis cell such as a solid polymer film water electrolysis cell or an alkaline water electrolysis cell. In this case, the evaluation apparatus may include a water supply path 201 that supplies water to a water electrolysis cell at a predetermined flow rate $Q_{H2O}$, a hydrogen circulation path 202 through which hydrogen leaving the water electrolysis cell flows, an inert gas introduction path 203 that introduces an inert gas of a predetermined flow rate Qn into the hydrogen circulation path 202, a hydrogen concentration meter 204 that measures a hydrogen concentration in a mixed gas of hydrogen and the inert gas flowing through the hydrogen circulation path 202, and a hydrogen generation amount calculation unit 205 that calculates a hydrogen generation amount Qh in the water electrolysis cell based on the flow rate $Q_{H2O}$ of water supplied to the water electrolysis cell, the flow rate Qn of nitrogen introduced into the hydrogen circulation path 202, and the hydrogen concentration Ch measured by the hydrogen concentration meter. In this case, the hydrogen generation amount calculation unit 205 calculates the hydrogen generation amount Qh by using a relational equation of Qh = (Ch•Qn)/(1 - Ch).

In each of the above-described embodiments, the fuel gas is hydrogen and the oxidant gas is oxygen, but the present invention is also applicable to a fuel cell using another fuel gas or oxidant gas.

Further, in addition to the configuration of the above-described embodiments or in place of the configuration of the above-described embodiments, the fuel cell evaluation system may include a total consumption amount calculation unit that calculates a total consumption amount of the fuel gas as described below.

The total consumption amount calculation unit calculates a fuel gas consumption amount Qh2' which is the consumption amount of the fuel gas consumed in the reaction in the fuel cell FV based on electric power generated in the fuel cell, calculates a fuel gas discharge amount Qh3 which is the discharge amount of the fuel gas discharged without being consumed in the fuel cell FV, and calculates a total consumption amount (Qh2' + Qh3) of the fuel gas from the fuel gas consumption amount Qh2' and the fuel gas discharge amount Qh3. The fuel gas discharge amount Qh3 may be calculated using, for example, the result of the first embodiment.

The flow rate or the concentration in the relational equation of the embodiments may be, for example, a flow rate or a concentration corrected by the temperature of the gas, the pressure of the gas, or a set value of the flow rate adjusting device as long as the relational equation is satisfied.

Other various modifications and combinations of the embodiments may be made without departing from the spirit of the present invention.

Industrial Applicability

According to the present invention, an actual gas consumption amount in a fuel cell can be obtained in real time with accuracy.

Reference Signs List

100    fuel cell evaluation system
FV     fuel cell
2      fuel gas supply path
3      oxidant gas supply path
4      fuel gas discharge path
5      oxidant gas discharge path
6      inert gas introduction path
7      first fuel gas concentration meter
9      first oxidant gas concentration meter
10     fuel gas consumption amount calculation unit
11     oxidant gas cross leakage amount calculation unit
12     second oxidant gas concentration meter
13     second fuel gas concentration meter
14     fuel gas cross leakage amount calculation unit
15     oxidant gas consumption amount calculation unit

**Claims**

1.  A fuel cell evaluation system that calculates a consumption amount of a fuel gas in a fuel cell, the fuel cell evaluation system comprising:

    a fuel gas supply path that supplies the fuel gas of a first flow rate to the fuel cell;
    a fuel gas discharge path that discharges the fuel gas from the fuel cell;
    an inert gas introduction path that introduces an inert gas of a second flow rate into the fuel gas discharge path or the fuel gas supply path;
    a first fuel gas concentration meter that measures a fuel gas concentration in a mixed gas of the fuel gas and the inert gas flowing through the fuel gas discharge path; and
    a fuel gas consumption amount calculation unit that calculates a consumption amount of the fuel gas in the fuel cell based on the first flow rate, the second flow rate, and the fuel gas concentration measured by the first fuel gas concentration meter.

2.  The fuel cell evaluation system according to claim 1, wherein the fuel gas consumption amount calculation unit calculates the consumption amount of the fuel gas by using a relationship between a total discharge flow rate and a discharge flow rate of the fuel gas, the total discharge flow rate being a total of the discharge flow rate of the fuel gas discharged from the fuel cell and the second flow rate, and the fuel gas concentration measured by the first fuel gas concentration meter.

3.  The fuel cell evaluation system according to claim 1 or 2, wherein

    the fuel gas consumption amount calculation unit calculates the consumption amount of the fuel gas by using a relational equation of $Qh2 = Qh1 - (Ch1 \cdot Qn)/(1 - Ch1)$,
    where $Qh2$ is the consumption amount of the fuel gas, $Qh1$ the first flow rate, $Qn$ is the second flow rate, and $Ch1$ is the fuel gas concentration measured by the first fuel gas concentration meter.

4.  The fuel cell evaluation system according to any one of claims 1 to 3, wherein

    the inert gas introduction path introduces an inert gas of a predetermined rate into the fuel gas supply path, and
    a fuel gas concentration to be supplied to the fuel cell is changed by adjusting a flow rate of the inert gas to be supplied to the fuel gas supply path.

5.  The fuel cell evaluation system according to any one of claims 1 to 4, further comprising:

    a first oxidant gas concentration meter that measures an oxidant gas concentration in the mixed gas in the fuel gas discharge path; and
    an oxidant gas cross leakage amount calculation unit that calculates a cross leakage amount of an oxidant gas based on the oxidant gas concentration measured by the first oxidant gas concentration meter.

6.  The fuel cell evaluation system according to any one of claims 1 to 5, further comprising:

    an oxidant gas supply path that supplies an oxidant gas of a third flow rate to the fuel cell;
    an oxidant gas discharge path through that discharges the oxidant gas from the fuel cell;
    an inert gas introduction path that introduces an inert gas of a fourth flow rate into the oxidant gas discharge path or the oxidant gas supply path;
    a second oxidant gas concentration meter that measures an oxidant gas concentration in a mixed gas of the oxidant gas and the inert gas flowing through the oxidant gas discharge path; and
    an oxidant gas consumption amount calculation unit that calculates a consumption amount of the oxidant gas in the fuel cell based on the third flow rate, the fourth flow rate, and the oxidant gas concentration measured by the second oxidant gas concentration meter.

7.  The fuel cell evaluation system according to claim 6, further comprising:

    a second fuel gas concentration meter that measures a fuel gas concentration in the mixed gas flowing through the oxidant gas discharge path; and
    a fuel gas cross leakage amount calculation unit that calculates a cross leakage amount of the fuel gas based on the fuel gas concentration measured by the second fuel gas concentration meter.

8. A fuel cell evaluation system that calculates a consumption amount of an oxidant gas in a fuel cell, the fuel cell evaluation system comprising:

an oxidant gas supply path that supplies an oxidant gas of a first flow rate to the fuel cell;
an oxidant gas discharge path that discharges the oxidant gas from the fuel cell;
an inert gas introduction path that introduces an inert gas of a second flow rate into the oxidant gas discharge path or the oxidant gas supply path;
an oxidant gas concentration meter that measures an oxidant gas concentration in a mixed gas of the oxidant gas and the inert gas flowing through the oxidant gas discharge path; and
an oxidant gas consumption amount calculation unit that calculates the consumption amount of the oxidant gas in the fuel cell based on the first flow rate, the second flow rate, and the oxidant gas concentration measured by the oxidant gas concentration meter.

9. A fuel cell evaluation system that calculates a consumption amount of a fuel gas in a fuel cell, the fuel cell evaluation system comprising:

a fuel gas supply path that supplies the fuel gas of a first flow rate to the fuel cell;
a fuel gas discharge path that discharges the fuel gas from the fuel cell;
an inert gas introduction path that introduces an inert gas of a second flow rate into the fuel gas discharge path or the fuel gas supply path;
a first fuel gas concentration meter that measures a fuel gas concentration in a mixed gas of the fuel gas and the inert gas flowing through the fuel gas discharge path; and
a total consumption amount calculation unit that calculates a fuel gas consumption amount that is a consumption amount of the fuel gas consumed through a reaction in the fuel cell based on electric power generated in the fuel cell, calculates a fuel gas discharge amount that is a discharge amount of the fuel gas discharged without being consumed in the fuel cell, and calculates a total consumption amount of the fuel gas from the fuel gas consumption amount and the fuel gas discharge amount.

10. A fuel cell evaluation method for calculating a consumption amount of a fuel gas in a fuel cell using the fuel cell evaluation system according to any one of claims 1 to 7, the fuel cell evaluation method comprising:

measuring a fuel gas concentration in a mixed gas of the fuel gas and the inert gas flowing through the fuel gas discharge path; and
calculating the consumption amount of the fuel gas in the fuel cell based on the first flow rate, the second flow rate, and the fuel gas concentration.

**100**

INERT GAS (NITROGEN)

FUEL GAS (HYDROGEN)

OXIDANT GAS (OXYGEN)

**61** MFC

**21** MFC

**31** MFC

**6** (NITROGEN SUPPLY AMOUNT Qn)

**2** (HYDROGEN SUPPLY AMOUNT Qh1)

**3**

**22**

**32**

FV

FUEL CELL (TEST PIECE)

(HYDROGEN CONSUMPTION AMOUNT Qh2)

**4** (HYDROGEN DISCHARGE AMOUNT Qh3)

**41**

**5**

**51**

**7a**

**7**

(HYDROGEN CONCENTRATION Ch1)

**10** FUEL GAS CONSUMPTION AMOUNT CALCULATION UNIT

**Fig.1**

Fig.2

Fig.3

EP 4 310 965 A1

Fig.4

EP 4 310 965 A1

Fig.5

Fig.6

(CONVENTIONAL EXAMPLE)

**Fig.7**

## INTERNATIONAL SEARCH REPORT

| | International application No. |
|---|---|
| | **PCT/JP2022/011441** |

**A. CLASSIFICATION OF SUBJECT MATTER**

*H01M 8/04313*(2016.01)i; *H01M 8/0444*(2016.01)i; *H01M 8/04746*(2016.01)i; *H01M 8/10*(2016.01)i; *H01M 8/12*(2016.01)i
FI: H01M8/04313; H01M8/0444; H01M8/04746; H01M8/10 101; H01M8/12 101

According to International Patent Classification (IPC) or to both national classification and IPC

**B. FIELDS SEARCHED**

Minimum documentation searched (classification system followed by classification symbols)
H01M8/04313; H01M8/0444; H01M8/04746; H01M8/10; H01M8/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-207425 A (CENTRAL RESEARCH INST. OF ELECTRIC POWER INDUSTRY) 19 November 2015 (2015-11-19) <br> paragraphs [0024], [0050]-[0062], fig. 1-3 | 1-10 |
| A | JP 2010-243180 A (TOYOTA MOTOR CORP.) 28 October 2010 (2010-10-28) <br> paragraphs [0020]-[0025], [0027], [0034], [0035], fig. 1, 2 | 1-10 |

☐ Further documents are listed in the continuation of Box C.   ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **29 March 2022** | **12 April 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

| | | | International application No. |
| --- | --- | --- | --- |
| | | | **PCT/JP2022/011441** |

| Patent document cited in search report | | | Publication date (day/month/year) | Patent family member(s) | Publication date (day/month/year) |
| --- | --- | --- | --- | --- | --- |
| JP | 2015-207425 | A | 19 November 2015 | (Family: none) | |
| JP | 2010-243180 | A | 28 October 2010 | (Family: none) | |

Form PCT/ISA/210 (patent family annex) (January 2015)

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005135662 A